# EUROPEAN PATENT APPLICATION

(11) **EP 4 434 837 A1**
(43) Date of publication of application: **25.09.2024**
(21) Application number: 23172588.8
(22) Date of filing: 10.05.2023
(51) Int. Cl.: B60W 30/09, B60W 30/095, B60W 50/14, B60W 50/16

(54) **USER INTERFACE FOR DRIVER SITUATIONAL AWARENESS**

(30) Priority: 24.03.2023 US 202363492025 P
(71) Applicant: Aptiv Technologies AG, 8200 Schaffhausen (CH)
(72) Inventor: Larsson, Martin X., 461 31 Trollhättan (SE)
(74) Representative: Manitz Finsterwald Patent- und Rechtsanwaltspartnerschaft mbB

(57) **Abstract**

This document describes techniques and systems for User Interfaces (UI) for driver situational awareness. An exemplified UI may output information to give drivers a greater awareness of potential collision threats, without annoying or desensitizing them using frequent or false alarms. Rather than output strong warnings to elicit an emergency driver response, the UI generates subtle early-warning indicators presented as UI elements showing markers to each potential threat relative to a vehicle path. Each object reported in the UI elements indicate information as subtle cues (e.g., audible, visual, and/or haptic feedback) that are weaker magnitude than signals output for forward-collision or other emergency warnings. This subtlety in information presented in the UI is effective at informing a driver, without alarming or distracting them. A driver that is more aware of potential dangers may drive with greater confidence and without fear of threats hidden from their view.

## Description

### TECHNICAL FIELD

This document relates to a user interface for a driver of a vehicle.

### BACKGROUND

To improve road safety, vehicles may be equipped with safety features of an Advanced Driver Assistance System (ADAS), which monitors for critical situations to improve situational awareness and help drivers react to avoid a crash. Forward Collision Warning (FCW) and Automatic Emergency Braking (AEB) are designed to initially warn the driver of danger before the ADAS automatically intervenes to prevent it. The FCW outputs an emergency alert (e.g., a loud audible sound, bright or flashing visible cue, intense haptic feedback), which is a strong signal meant to elicit an immediate driver response to the emergency. If the driver does react to the FCW with sufficient urgency to prevent an immediate collision, the AEB automatically overrides the vehicle controls to cause a sudden correction (e.g., hard-braking) to avoid the danger.

To be most effective, care is taken to output the FCW only when a situation turns critical (e.g., when a collision is predicted near in range or time). This occurs when a final opportunity is predicted for a driver to control inputs for preventing a crash. If without driver correction, a collision prediction can still change and not result in a crash (e.g., when a collision is predicted far in range or time), then the FCW is suppressed. Without controlling the FCW to only intervene during critical situations, the ADAS may underperform and routinely output frequent false positives (e.g., low likelihood collision predictions). Numerous false alarms may distract or even overwhelm drivers, which may cause unsafe or uncomfortable driving.

### SUMMARY

This document describes techniques and systems related to user interfaces for improving driver situational awareness to potential collision threats. The described techniques and systems output a user interface (UI), such as a Human-Machine Interface (HMI), to a driver of a vehicle. The UI is output to include UI elements (e.g., audible, visual, and/or haptic) for informing the driver about collision threats to improve driver situational awareness and assess each collision risk. Variation in the UI elements is used to help drivers a greater awareness of potential threats to help them make safe driving decisions, without annoying or desensitizing the drivers with frequent false alarms that might otherwise distract drivers and reduce vehicle safety. Rather than output strong warning signals to elicit an emergency driver response, the UI generates UI elements that provide early-warning reference indicators to potential threats relative to a vehicle path. A corresponding level of risk for each object is conveyed in the UI elements with subtle cues (e.g., audible, visual, and/or haptic feedback). For example, the UI elements are output through the UI using weaker magnitude signals than other signals output on the vehicle, e.g., for forward-collision or other emergency warnings. This subtlety in how risk is conveyed for each collision threat enables the UI and the UI elements to be effective at informing a driver, without alarming or distracting them. A driver that is more aware of potential dangers may drive with greater confidence and without fear of threats that may be hidden from the driver's view.

In one example, a method for indicating changes in severity of collision risks to driving is provided. The method includes obtaining information indicative of potential collision threats to objects detected near a travel path of a host vehicle. The information including a Time-To-Collision (TTC) parameter for each of the potential collision threats. The method further includes determining, by at least one processor of a host vehicle, a corresponding collision risk level for each of the potential collision threats based on the TTC parameter obtained for that potential collision threat. The method further includes outputting, for assisting a driver of the host vehicle, a user interface including an arrangement of interface elements indicating a relative location along the travel path and the corresponding collision risk level determined for each of the potential collision threats.

The techniques and systems described herein also provide systems that execute steps of the above-summarized method and others, as part of computer-implemented processes, as well as means for the system to perform the steps. For example, a processor of a vehicle or vehicle system may be configured to execute the above-summarized method, including in some cases by retrieving instructions for executing the method, which are stored on a computer-readable storage medium.

This Summary introduces simplified concepts related to the described UI for driver situational awareness and are further described in the Detailed Description and Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of a User Interface (UI) for driver situational awareness is described in this document with reference to the following figures. The same numbers are often used throughout the drawings to reference like features and components:
FIG. 1 illustrates an environment in which an exemplified UI for driver situational awareness is used on a host vehicle;
FIG. 2 illustrates an example driver view from a host vehicle configured to provide an exemplified UI for driver situational awareness;
FIG. 3 illustrates an example traffic situation where an otherwise potential collision threat is mitigated with an exemplified UI for driver situational awareness;
FIG. 4 illustrates an example traffic situation where another potential collision threat is mitigated with an exemplified UI for driver situational awareness;
FIG. 5 illustrates an exemplified process executed by a vehicle with a UI for driver awareness; and
FIG. 6 illustrates an exemplified vehicle architecture with a UI for driver awareness.

### DETAILED DESCRIPTION

An ADAS typically executes or interfaces with an object detection and/or tracking function on the vehicle to predict whether any objects in the environment pose critical safety threats sufficient for warning or intervening. The ADAS is configured to receive information from many sources to learn about the environment. The information is processed to correctly identify each critical situation and induce an appropriate driver or vehicle response that does not falsely alarm the driver to a non-emergency. A list of objects may be maintained with each object being associated with an assessed level of risk or estimated chance of causing a collision. Rather than generate warning to non-critical situations and potentially reduce the effectiveness of emergency alerts, an example User Interface (UI) for driver situational awareness is described, which packages the information maintained about detected objects and their threat level into recognizable UI elements or signals of a UI directed to an operator of a vehicle, also referred to as a driver interface. When the UI elements of the driver interface are output, information they convey heightens a driver's understanding of an environment to improve driver awareness about collision risks, without annoying or surprising the driver to react at a last moment.

For example, an example UI can be output as part of a graphical user interface (GUI), audible interface, haptic feedback interface, or any combination thereof, which is perceivable to a driver. The UI may be a Human-Machine Interface (HMI) (e.g., gauge cluster, heads up display) that is adapted to indicate relative markers associated with the objects being tracked in the environment. Two-dimensional representations of a vehicle point of view may be presented including three-dimensional object-models displayed relative their current position and heading at that time. The HMI may refrain from highlighting certain objects likely to pose no threat or that the driver is likely already aware of (e.g., from gaze detection analysis).

In operation, the UI generates an early-warning reference indicator (e.g., a reference map) with the reference markers to potential threats presented relative a host vehicle position and/or trajectory to inform the driver, during non-critical situations, about objects near a vehicle travel path. The markers may indicate relative position and movement of each object in comparison to a vehicle position and estimated trajectory. Each object reported in reference map is conveyed with subtle cues (e.g., audible, visual, and/or haptic feedback) that are much weaker signals than the strong signals output for emergency warnings. These subtle signals provided in the reference map are intended to inform, without alarming or distracting, the driver to be made more aware of potential dangers that may be partially hidden or obscured from a driver position.

As such, the UI is configured to inform a driver to help anticipate when critical situations may occur, which is different than traditional safety features that are designed to cause an emergency reaction. The UI conveys information about potential threats to improve driver awareness of potential threats, to help ease worry and not cause distraction. The UI outputs subtle signals to not annoy a driver who may already be driving cautiously or with a heightened awareness.

By highlighting objects in a driver interface adapted to include an example UI, the ADAS system can make the driver aware to objects are already being assessed by the ADAS system, but do not rise to the level of causing warnings. The techniques enable the driver to gain awareness about otherwise unforeseen circumstances, without adding complexity to an existing overall ADAS object detection or vehicle architecture. In this way, the driver is provided with extra information even more intelligently to elicit a positive response from having advanced notice about changing traffic situations, without being annoyed from presence of known obstacles.

With advance notice and improved driver situational awareness, the UI may prevent delayed reactions caused by a driver that is surprised when a prediction suddenly changes to an imminent threat. Drivers may have more time to try to mitigate a situation before the FCW and/or AEB engages; this provides drivers more time to react before a situation becomes critical, without being inundated with numerous false alarms to collision predictions that are unlikely to occur. The information output from the UI elements can improve driving comfort and driving safety without hindering the effectiveness of emergency alerts in critical situations.

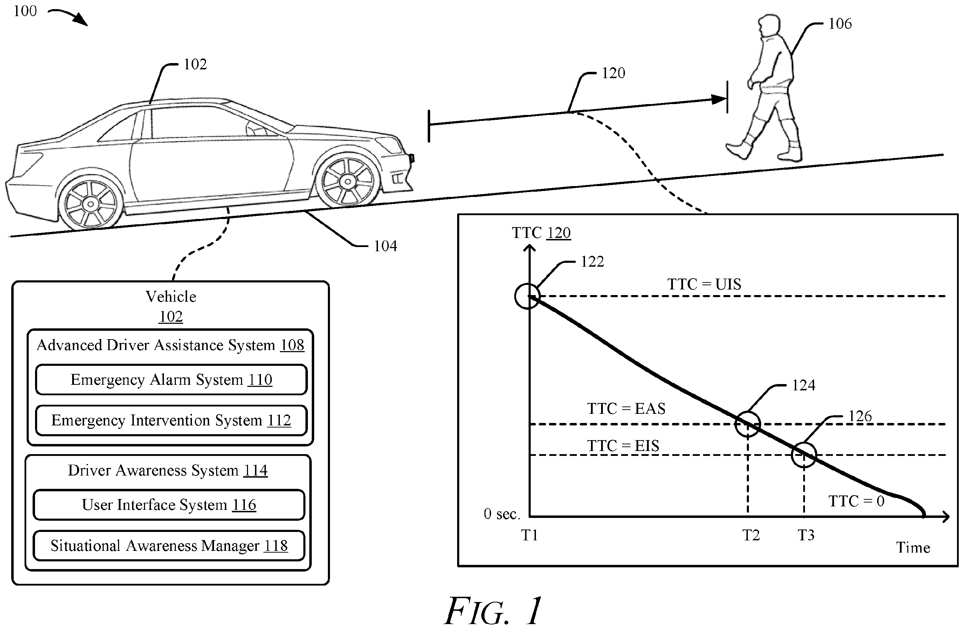

FIG. 1 illustrates an environment 100 in which an example UI for driver situational awareness is used on a host vehicle. In the depicted environment 100, a vehicle 102 is driving along a roadway 104 with an object 106 (e.g., a pedestrian, a bicycle, another vehicle) located near or in the roadway 104, which is a potential collision threat, or in other words, current trajectories of the vehicle 102 and the object 106 indicate the vehicle 102 may collide or crash into the object 106. Although illustrated as an automobile, the vehicle 102 can represent other types of motorized vehicles (e.g., a passenger truck, a car, a motorcycle, a bus, a tractor, a semi-trailer truck), watercraft (e.g., a boat), or aircraft (e.g., an airplane).

The vehicle 102 is a host vehicle in context of this disclosure. The vehicle 102 includes an Advanced Driving Assistance System (ADAS) 108 to help the driver avoid collisions including with the object 106. The ADAS 108 includes an emergency alarm system 110 and an emergency intervention system 112. The emergency alarm system 110 may be a Forward Collision Warning (FCW) safety feature configured to activate an emergency alarm onboard the vehicle 102 to warn the driver of the vehicle 102 that a driver reaction (e.g., hard braking) is recommended to avoid an impending collision. The emergency intervention system may be an Automatic Emergency Brake (AEB) safety feature configured to activate an emergency countermeasure to prevent collisions when a crash is imminent.

The ADAS 108 may include one or more processors configured to obtain information indicative of potential collision threats from objects detected near a travel path of the vehicle 102. For example, the vehicle 102 includes one or more object detectors, which are sensors or devices that generate reports of objects detected in the environment 100. Each sensor of the vehicle 102 generate sensor data (e.g., camera, lidar, radar, ultrasound). The ADAS 108 can obtain other information, such as V2X data including external observation data obtained from object detection devices installed in other vehicles or V2X infrastructure. The ADAS 108 infers position, trajectory, and other information (e.g., classification, size) based on the information obtained from these onboard and external object detectors to estimate a Time-To-Collision (TTC) for each of the potential threats.

A processor of the ADAS 108 can receive camera data, radar data, or any combination of various types of sensor data to increase perception capability of the ADAS 108 across a variety of driving conditions. For example, information about objects detected with a camera may be more reliable when a radar sensor field of view is obstructed by a guard rail. The radar information may be of higher value for predicting collision threats when weather or poor visibility is an issue for the camera and the driver. The ADAS 108 maintains TTC parameters associated with the obj ects detected in the environment 100 and outputs the TTC parameters and/or triggers activation of safety features on the vehicle 102 based on their values.

As an example, the ADAS 108 may cause the emergency alarm system 110 to activate in response to the TTC parameter for any object being less than or equal to approximately one and one half seconds. This activation threshold for the emergency alarm system 110 may provide sufficient time for the driver of the vehicle 102 to immediately react with driver inputs to the vehicle 102 (e.g., hard force applied to the brake pedal, counter steering) to avoid a predicted collision ahead. If set too high output with a magnitude to notify and alarm the driver too early, the ADAS 108 may be annoying or even startle the driver and decrease safety.

As another example, if the emergency alarm and/or driver inputs are ineffective at increasing the TTC value, and the TTC parameter associated with any object is less than or equal to approximately one second, the ADAS 108 may cause the emergency intervention system 112 to activate in response. This emergency intervention system 112 is configured to activate (e.g., automatically causing corrective steer or maximum brake input to the vehicle controls) at a last predicted opportunity to avoid the collision despite the emergency alarm. Setting this threshold inaccurately (e.g., too high) can further induce driver annoyance or decrease safety.

To improve driver situational awareness in preventing crashes beyond the capabilities of the ADAS 108, the vehicle 102 includes a driver awareness system 114, which may allow drivers to anticipate critical situations sooner than with reliance on these existing emergency features. The driver awareness system 114 provides a user interface (UI) system 116, which is also referred to as a driver interface 116, and a situational awareness manager 118. The driver awareness system 114 may execute as part of the ADAS 108 or be performed from executing instructions on other processing circuitry or hardware on the vehicle 102.

The UI system 116 is configured to output signals to a driver of the vehicle 102, which instead of causing surprise or annoyance may improve driver awareness. The signals output from the UI system 116 are user interface elements. The user interface elements are output with characteristics tuned to provide advanced notice of possible critical situations, which may in the future but do not presently require immediate driver reactions. Information output in the signals conveyed by the interface elements output from the UI system 116 may help the driver supervise the environment 100 before the emergency thresholds for warnings and/or intervention are triggered. The UI system 116 enables the vehicle 102 to improve driving safety by increasing possible reaction time for the driver to intervene before a situation turns critical. These subtle cues from the UI system 116 may greatly improve driving experiences with gained attention, which increases vehicle safety.

The situational awareness manager 118 monitors information from the ADAS 108 to update the UI system 116 as the environment 100 changes and objects move in and out of a threat category. For instance, the situational awareness manager 118 receives information from the ADAS 108 indicating the TTC parameters associated with the potential collision threats predicted by the ADAS. The situational awareness manager 118 can maintain the potential collision threats in a list or other data store to keep track of each potential collision threat including an indication of criticality or chance of resulting in a vehicle crash.

For example, a TTC 120 exists between the vehicle 102 and the object 106. Overtime, the TTC 120 may decrease (as shown in the graph in FIG. 1) and change values from times T1 to T3. Based on the TTC parameter for each of the potential collision threats monitored and reported in the output from the ADAS 108, a corresponding collision risk level is selected and assigned by the situational awareness manager 118 for each of the potential collision threats.

A low risk level before time T1 can be assigned to a collision threat when the TTC is high (e.g., greater than three or four seconds) to indicate less need to supervise the collision threat at the present time. For example, if the TTC 120 is greater than a reporting threshold, then the situational awareness manager 118 refrains from signaling about that potential collision threat through information conveyed in UI elements of the UI system 116. If the TTC 120 later decreases and eventually falls below or satisfies the reporting threshold, then a medium risk level 122 is assigned to that threat.

The medium risk level 122 has a lower TTC value than the low risk threats (e.g., between one and a half and three or four seconds) and may be assigned to collision threats between times T1 and T2. The UI system 116 is configured to signal without alarming the driver to notice each of the potential collision threats that is of the medium risk level 122. The medium risk level 122 can be assigned a range of TTC values to give warning of a growing threat before the situation turns critical and the emergency warning is issued (e.g., set to an FCW threshold). The medium risk level 122 may be associated with a range of values of TTC parameters determined to be greater than an emergency threshold for triggering a collision warning to cause an audible alarm to be output separate from the user interface. That is, different vehicles can set the medium risk level 122 to encompass a larger or smaller range of TTC parameters leading up to a mandated emergency threshold, such as an FCW threshold and/or AEB threshold.

A high risk level 124 can be assigned a shorter TTC threshold (e.g., less than one and one half seconds, less than one second), which corresponds to a TTC that is just outside the range of the medium risk level 122. The high risk level 124 is set to a TTC threshold meant to improve effectiveness of emergency alarms that are output from the emergency alarm system 110. The high risk level 124 may be associated with a range of values of TTC parameters determined to be between mandated emergency thresholds. That is, the high risk level 124 may be attributed to the TTC parameters determined to be between the emergency threshold (e.g., the FCW threshold) and an automatic intervention threshold for triggering an automated vehicle countermeasure to avoid the vehicle crash (e.g., the AEB threshold). A critical risk level 126 can be assigned a shortest TTC threshold, such that automatic intervention occurs when a situation is critical and the TTC nears zero (e.g., the TTC is less than one second) to enable the emergency intervention system 112 to mitigate the danger. The critical risk level 126 may be for the TTC parameters determined to be at or less than the automatic intervention threshold (e.g., the AEB threshold).

The TTC threshold for the risk levels 122, 124, and 126 may be different depending on different safety regulations throughout the world. Some vehicle ADAS systems operate by triggering an FCW at one and a half seconds TTC, whereas in other vehicles, their ADAS systems may trigger the FCW at one point seven seconds TTC. Furthermore, the TTC threshold for the risk levels 122, 124, and 126 may be different depending on different driving conditions (e.g., different driving speeds). For example, the risk levels 122, 124, and 126 may be set to higher values when a vehicle drives at slow speeds and lower TTC values as the speed increases and reaction time needed for the driver or automatic intervention grows. The high risk level 124 associated with the FCW can be determined as an offset applied to the critical risk level 126 associated with the AEB. This offset may be approximately one and a quarter seconds. The high risk level 124 is set earlier than the AEB threshold to account for an estimated reaction time of the driver (e.g., around 1.2 seconds) to respond to an emergency alarm.

The situational awareness manager 118 controls the UI system 116 to cause a driverawareness user interface to be output inside the vehicle 102, for assisting a driver of the vehicle 102. The UI system 116 can output the user interface on any display, surface, or with various types of visual, audible, and/or haptic feedback. For example, a gauge cluster behind a steering wheel is often used to indicate current speed and navigation information to help drive. The information displayed in a clear (e.g., unobstructed) view of the driver can be modified to include information from the UI system 116 to provide additional driver assistance.

The UI system 116 is configured to output, for presentation to the driver, an arrangement of UI elements (e.g., graphical elements, audible sounds, directed vibrations) for indicating to the driver about relative locations on the travel path where each of the collision threats is present. Also provided is an indication of a collision risk level corresponding to each threat, which is determined from a level assigned by the situational awareness manager 118. The UI elements output for displaying or otherwise conveying each of the collision threats can have a different color or size, variable frequency flash pattern, or other indication make identifying the level of risk easier to the driver. For example, green color can be used for a bounding box type graphical UI element to indicate a low risk collision threat, yellow for medium, and red for high risk. Varying intensity of the interface elements, such as sound (e.g., silent, quiet, loud) or vibration of audible or haptic type interface elements may be effective at indicating changes in severity or level of risk of each potential collision threat.

The situational awareness manager 118 is responsible for updating the user interface output by the UI system 116. The ADAS 108 regularly updates the TTC associated with the collision threats. If an update to a TTC parameter indicates a change in risk associated with that collision, the situation awareness manager 118 controls the UI system 116 to modify a corresponding UI element representative of that threat. For example, the UI system 116 adjust the arrangement of UI elements for signaling the driver about any changes to the relative location or to the current level of collision risk selected and assigned based on the updated TTC. A larger size or more prominent color can be used for a bounding box (or other UI representation of the collision threat) to indicate a greater risk of collision threat, which may be effective at providing subtle notice and increasing driver awareness of the environment 100.

If the improved driver situational awareness is still not effective at preventing a situation from turning critical, the UI system 116 allows the emergency alarm system 110 and/or the emergency intervention system 112 to activate normally, as indicated above, to prevent a crash. The UI system 116 may improve effectiveness of the emergency alarm system 110 and/or the emergency intervention system 112 in preventing crashes more frequently because the driver is prepared for their alarms and sudden corrections even if they cannot react in time to drive safely on their own. For example, if the TTC parameters or updated TTC associated with any of the collision threats satisfies an emergency threshold, the ADAS 108 may activate a collision warning system for outputting an emergency interface for alarming the driver to avoid a collision. If that is not effective, the ADAS 108 may initiate an emergency brake function to cause a sudden stop.

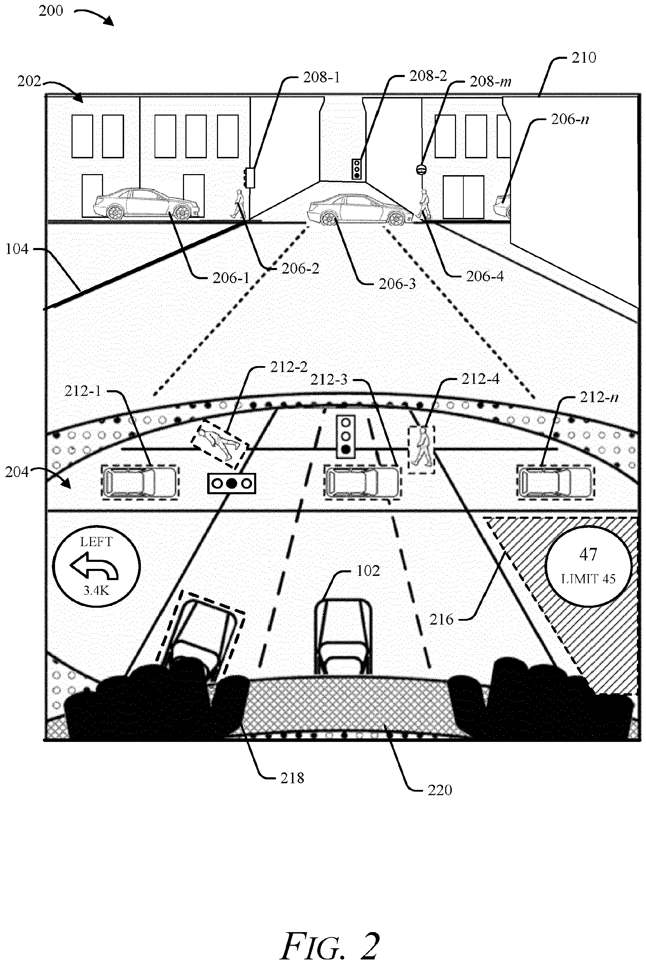

FIG. 2 illustrates an example driver view 200 from a host vehicle configured to provide an example UI for driver situational awareness. For example, a driver 218 of the vehicle 102 may supervise an environment for safe driving by monitoring for objects that can appear in and out of a driver field of view 202 from behind a steering wheel 220. In the driver field of view 202, multiple objects 206-1 to 206-n (collectively "objects 206") are visible near the roadway 104. Also visible are several infrastructure devices 208-1 to 208-m (collectively "infrastructure devices 208") appear in view of the driver 218, including a traffic light 208-1, another traffic light 208-2, and a traffic camera 208-3.

A vehicle 206-1 is stopped because of the traffic light 208-1, as a pedestrian 206-2 crosses an intersection in the roadway 104. Another vehicle 206-3 is exiting an intersection in the roadway 104 as another pedestrian 206-4 begins to cross. The pedestrian may not have right of way because the traffic light 208-2 is set to allow the vehicle 102 to proceed through the intersection at the same time the pedestrian 206-4 is crossing. Partially masked in the driver field of view 202 is a third vehicle 206-n. A building 210 or other structure prevents the driver 218 from seeing the third vehicle 206-n because of the obstruction.

The pedestrian 206-4 may be difficult to notice in the field of view 202 because of the crossing vehicle 206-3. The driver 218 may recognize that the vehicle 206-3 is exiting the intersection, which is otherwise indicated as clear for travel based on a green light from the traffic light 208-2. The driver 218 may not anticipate that the pedestrian 206-4 is j-walking and react too slow to avoid a collision but for an emergency alarm and/or emergency intervention.

To help the driver 218, the vehicle 102 provides a driver awareness user interface 204 to be able to assess whether to expect an emergency given relative positions and expected movements of the objects 206. To avoid alarms and emergencies, the interface 204 includes a clear indication of the objects 206 and their assessed level of risk to causing a crash. The user interface 204 is shown as being located behind the steering wheel 220 of the vehicle 102 to include graphical UI elements arranged to appear similar to the relative locations of objects outside the vehicle 102. Other displays and feedback systems (e.g., light bars, sound devices, haptic generators) may be used to signal the driver 218 to pay attention to a particular one or group of the objects 206. A heads-up display on the windshield may be used to augment the driver field of view 202 with graphical UI elements appearing on the windshield from regions where each object is visible to the driver.

The user interface 204 is output, for assisting a driver of the host vehicle 102. The user interface 204 includes an arrangement of interface elements 212.

The user interface 204 includes an arrangement of interface elements 212 (e.g., graphical elements 212-1 to 212-n) that are output for each potential collision threat from any of the detected objects 206. For instance, the interface elements 212 each indicate a relative location along the travel path and the corresponding collision risk level determined for each different potential collision threat. Graphical element 212-1 corresponds to the vehicle 206-1, graphical element 212-2 corresponds to the pedestrian 206-2, and so forth with graphical elements 212-3, 212-4, and 212-n corresponding to objects 206-3, 206-4, and 206-n, respectively. Further highlighted in the user interface 204 is an obstruction 216. The indication of the obstruction 216 may be output when objects in the environment 100 are present but are outside the view of the driver 218.

The ADAS 108 may provide information to the situational awareness manager 118 about more objects than are visible from the field of view 202. For example, the vehicle 102 may receive a message from the traffic camera 208-m indicating the object 206-n having traveled recently passed the intersection. The message may be a Vehicle-To-Everything (V2X) type message; and can arrive from the traffic lights 208-1, 208-2, or even the other vehicles 206-1, 206-3, and 206-4. If connectivity is available through a mobile device (e.g., phone, watch) of the pedestrians 206-2 or 206-4, a V2X message may be received from either source indicating the presence of objects otherwise obscured by the building 210.

The situational awareness manager 118 may obtain information from the ADAS 108 indicative of potential collision threats to objects 106 detected near a travel path of the host vehicle 102. The information includes a TTC parameter for each of the potential collision threats, which the situational awareness manager 118 uses to determine a corresponding collision risk level for each of the potential collision threats. Each corresponding collision risk level is determined based on the TTC parameter obtained for that potential collision threat. The situational awareness manager 118 configures the user interface 204 to be updated based on new information from the ADAS 108 to indicate changes in TTC and/or level of criticality associated with the objects 206 so the driver 218 can be prepared to drive safely in the intersection. Based on updated TTC parameters obtained for each of the potential collision threats, the interface elements 212 may be modified to indicate changes to the relative location or the corresponding collision risk level determined for each of the potential collision threats. The user interface 204 is updated by the user interface system 116 and/or from information obtained from the situational awareness manager 118 indicating changes in severity of potential collision risks to driving in the environment 100.

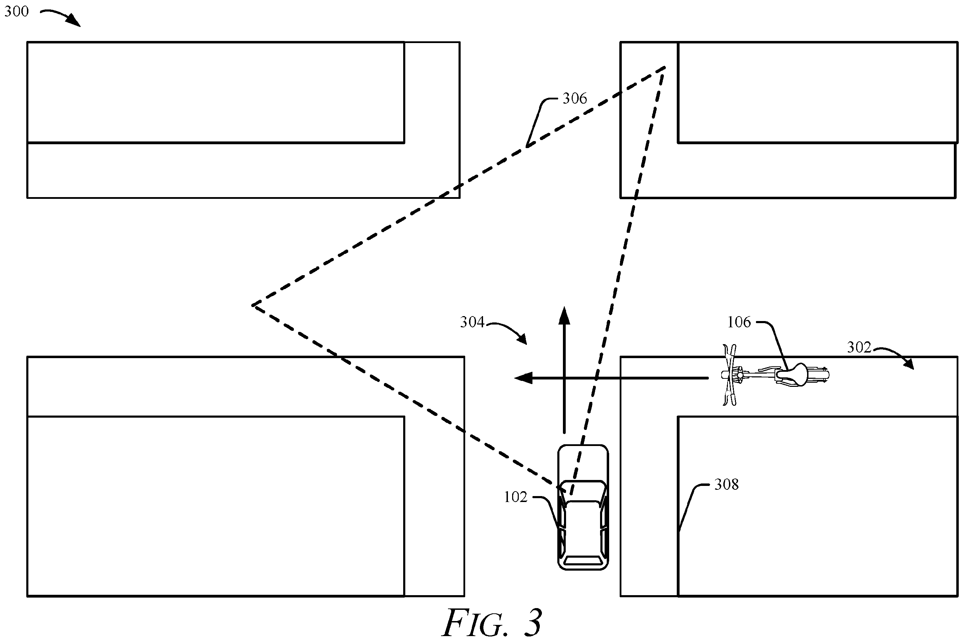

FIG. 3 illustrates an example traffic situation 300 where an otherwise potential collision threat is mitigated with an example UI for driver situational awareness. In the situation 300, the vehicle 102 is driving towards an intersection 304 at the same time the object 106 (e.g., a cyclist) is traveling on a bicycle path or sidewalk 302 towards the same intersection 304. In this example, the driver of the vehicle 102 only has a visible field of view 306, which does not capture the object 106. An obstruction 308 (e.g., a building) may prevent the driver from seeing the object 106 to be able to react and avoid a crash.

However, onboard sensors of the vehicle 102 may communicate to the ADAS 108 information about the object 106 captured by a sensor with a better view than the driver to detect the object 106 behind the obstruction 308. For example, the obstruction 308 may be a hedge or fence; using a front radar or roof mounted camera on the vehicle 102, the onboard sensor may have an improved view of the potential collision threat because of a higher mounting position (e.g., sufficient to detect a bike helmet moving lateral to a top of a hedge). The driver awareness system 114 may receive information from the ADAS 108 about hidden objects that do not appear to the driver to be a current threat, and present that information to the driver to cause less annoyance and improve safety. For example, an indication of a moving bicycle that is highlighted a different color depending on its assessed level of collision risk to help the driver prepare for the intersection 304.

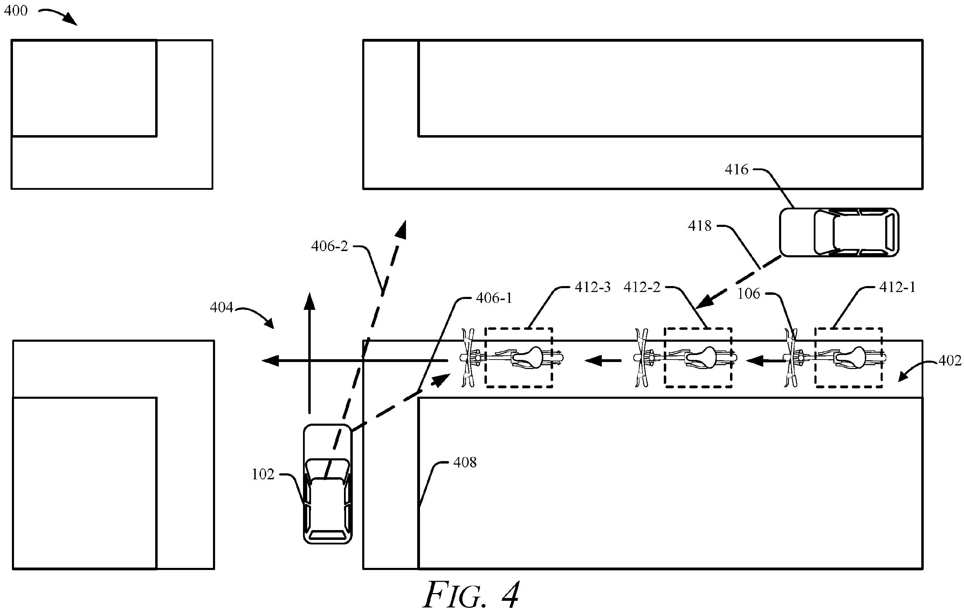

FIG. 4 illustrates an example traffic situation 400 where another potential collision threat is mitigated with an example UI for driver situational awareness. In the situation 400, V2X communication is used to track the object 106 while the object 106 is obstructed from onboard vehicle sensors (e.g., radar, camera) and/or the driver. V2X refers to communications between a vehicle and any entity that may affect, or may be affected by, the vehicle. V2X communication systems handle various more specific types of communication, such as, V2I (vehicle-to-infrastructure), V2N (vehicle-to-network), V2V (vehicle-to-vehicle), V2P (vehicle-to-pedestrian), and V2D (vehicle-to-device). An advantage of V2X communications is in improving vehicle safety. For example, a project named SECUR (Safety Enhancement through Connected Users on the Road) recognizes unrealized potential in V2X technology to improve safety by sharing information between road actors and road managers to avoid accidents.

In the situation 400, the host vehicle 102 includes a radar with a line of sight 406-1 and a camera with a line of sight 406-2. The vehicle 102 is driving towards an intersection 404 shared by the roadway 104 and a bicycle path 402. Another vehicle 416 is driving towards the intersection 404 on a roadway adjacent to the bicycle path 402; the vehicle 416 has a sensor line of sight 418 and is tracking the object 106 using an onboard ADAS of the vehicle 416. The line of sight 406-1 and the line of sight 406-2 do not provide a view around an obstruction 408, therefore, the ADAS 108 on the vehicle 102 cannot detect any potential threat using onboard sensors.

The UI system 116 is configured to output UI elements to provide information signaling the driver of the vehicle 102 about potential collision threats. Using V2X communication between the vehicle 102 and the vehicle 416, the ADAS 108 can receive information about the object 106 to cause the UI system 116 to update the driver interface and cause the driver to be aware of the object 106 as the object approaches. The UI system 116 may first show an indication of the bicyclist, which the driver cannot see, and then highlight the indication as over time the driver is not slowing down enough to be prepared for the situation. In this way, the situational awareness manager 118 may determine at least part of the information indicative of the potential collision threats based on sensor data obtained from one or more sensors of the vehicle 102. The situational awareness manager 118 may further determine a remainder of the information indicative of the potential collision threats based on V2X data obtained from one or more external V2X devices remote to the vehicle 102. In this way, information about objects detected near the vehicle 102 can come from a variety of information sources, which pass through the ADAS 108, to enable accurate information to be presented by the UI system 116 for minimizing annoyance and increasing safety.

In some examples, the host vehicle 102 may generate V2X messages to enable a similar user interface to be generated quickly by another vehicle. V2X messages may be output from the vehicle 102, to a V2X receiver of another vehicle, to cause updates directly to another driverawareness user interface of that other vehicle. For example, the V2X messages may include specific bits of data to flag an object of the message as being a potential threat for collision based on the observer point of view. Rather than process this specific message through traditional ADAS functions, another situational awareness manager on the remote vehicle can quickly make updates to the driver interface controlled on that vehicle. This may improve processing efficiency and performance of the systems and safety overall.

The UI system 116 may update the user interface 204 and cause the driver to be aware of the object 106 as the object approaches in various ways. For example, the interface elements 212 may be modified through changing a color, sound, or haptic signal of the interface elements 212 to indicate changes to the relative location or the corresponding collision risk level determined for each of the potential collision threats. For example, rearranging or repositioning the interface elements 212 to be arranged differently within the arrangement in the user interface 204 can be effective to indicate change to the relative location of each of the potential collision threats. Varying color, brightness, volume, or amplitude of each signal conveyed with the interface elements 212 may indicate changes to the corresponding collision risk level determined for each of the potential collision threats. This way, more than one feature of the user interface elements output by the UI system 116 can be modified to convey updates to potential collision threats, using subtle signals that do not annoy or distract the driver.

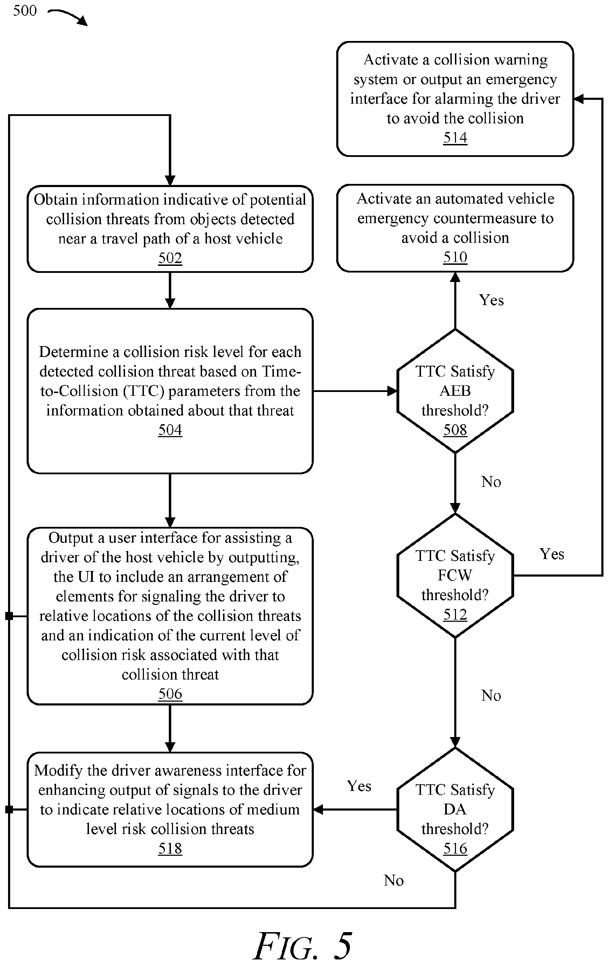

FIG. 5 illustrates an example process executed by a vehicle with a UI for driver awareness. The process 500 is shown as sets of operations (or acts) performed for indicating changes in severity of collision risks to driving; the process 500 is not necessarily limited to the order or combinations in which the operations are shown herein. Further, any one of one or more of the operations may be repeated, combined, or reorganized to provide other processes. In portions of the following discussion, reference may be made to the environment 100 and other elements described above in relation to FIGS. 1 through 4. These references are to provide clarity and aid in understanding, and do not limit the techniques to performance by any specific one or more entities.

At step 502, information indicative of potential collision threats from objects detected near a travel path of a host vehicle is obtained. For example, the ADAS 108 obtains information about the object 106 detected by another vehicle (e.g., with V2X) or based on sensor data from onboard camera, radar, lidar, or other sensing technology. The information includes the TTC parameters for each of the potential collision threats detected by the ADAS 108.

At step 504, a corresponding collision risk level for each of the potential collision threats based on the TTC parameter obtained for that potential collision threat is determined. That is, TTC parameters are monitored for the potential collision threats. The corresponding collision risk level for each of the potential collision threats may be determined to be one of a plurality of risk levels. Each of the risk levels being different and associated with a different range of TTC parameter values; each risk level indicates a different chance of resulting in a vehicle crash.

For example, the ADAS 108 may receive information about, or calculate directly, path predictions for the vehicle 102 and the object 106 and other objects tracked by the vehicle 102. If a potential intersection between paths is possible, then a potential collision threat is identified by the situational awareness manager 118; similar to performing a collision test for each object. As one example, consider at least three different risk levels used by the situational awareness manager 118. A first risk level for the TTC parameters is determined to be greater than an emergency threshold for triggering a collision warning to cause an audible alarm to be output separate from the user interface. That is, the first risk level may include a range of TTC values that exceed the FCW threshold, but are not so far in time (e.g., not too large) such that their chance of causing a collision is likely to change. A second risk level for the TTC parameters may include a lower range of TTC values determined to be between the emergency threshold and an automatic intervention threshold for triggering an automated vehicle countermeasure to avoid the vehicle crash. The second risk level may include a range of TTC values that satisfy (e.g., are less than or equal to) the FCW threshold but are not yet critical and may still change if the driver reacts prior to the AEB being triggered with the AEB threshold being satisfied. A third risk level may encompass a range of values for the TTC parameters determined to be at or less than the automatic intervention threshold (e.g., the AEB threshold).

At step 506, a user interface is output for assisting a driver of the host vehicle by presenting an arrangement of interface elements for indicating a relative location along the travel path and a corresponding collision risk level determined for each of the potential collision threats. For example, the situational awareness manager 118 may use a plurality of risk levels including one or more first risk levels indicating a lower chance (e.g., a minimal chance, a near zero or zero percent chance, less than a fifty-fifty chance) of that potential collision threat actually resulting in a vehicle crash. One or more second risk levels (e.g., a moderate chance, a greater than zero percent chance, near a fifty-fifty chance) indicating a greater chance of resulting in a vehicle crash may be between the first risk levels and a third risk level. The third risk level (e.g., a maximum chance, a near hundred percent chance, greater than a fifty-fifty chance) may indicate a vehicle crash is imminent.

As one example, the first risk level is selected for a first range of TTC values that are each greater than a maximum threshold for monitoring the collision threats. The first range of TTC values may be greater than approximately two and one half seconds. The second risk level may be selected for a second range of TTC values that are between the maximum threshold for monitoring the collision threats and the emergency threshold. The second range of TTC values may be greater than approximately one and one half seconds. The third risk level is sometimes selected for a third range of TTC values that are between the emergency threshold and an automatic intervention threshold for activating an automated vehicle emergency countermeasure to avoid a vehicle crash. The third range of TTC values may be greater than approximately one second and the automatic intervention threshold is approximately one second.

In some cases, when the third risk level is selected for that collision threat, the TTC parameters or updated TTC associated with any of the collision threats satisfies an emergency threshold. In addition to outputting the user interface, the TTC for each of the objects is evaluated by the ADAS 108 to activate or refrain from activating safety features (e.g., emergency warnings, emergency interventions). This way existing safety features can operate with the user interface without error or interruption.

At step 508, whether a TTC of any object satisfies an automatic emergency intervention threshold is determined. This can occur before, during, or after outputting the user interface.

At step 510, if Yes is the result of step 508, an automated vehicle emergency countermeasure is activated to avoid a collision. For example, if the TTC falls to one second or less, then the ADAS 108 may engage a braking controller to stop the vehicle. The ADAS 108 may, if any of the updated TTC parameters satisfies the automatic intervention threshold (e.g., AEB threshold), activate, separate from the user interface 204, an automated vehicle countermeasure (e.g., AEB) to avoid the vehicle crash.

At step 512, if No is the result of step 508, then whether a TTC of any object satisfies an automatic emergency warning threshold is determined. This can occur before, during, or after outputting the user interface.

At step 514, if Yes is the result of step 512, an automated vehicle emergency warning is activated to cause a driver to react to avoid the collision. Otherwise, the process repeats and returns to step 502. For example, if the TTC falls to between one and one half seconds and one second, then the ADAS 108 may engage an emergency alarm to wake the driver to the situation. The ADAS 108 may activate, separate from what occurs with the user interface 204, if any of the updated TTC parameters satisfies the emergency threshold for causing a collision warning output (e.g., FCW) to include an audible alarm.

Returning to the step 506, the user interface is configured to provide subtle indications of the degree of risk of collision, without alarming or annoying the driver. The step 506 is repeated to improve situational awareness for the driver as things in the environment change. In some examples, the situational awareness manager 118 relies on other information to improve accuracy and usefulness of the UI system 116.

At step 516, whether a TTC of any object satisfies a driver awareness (DA) threshold is determined. For example, if the AEB threshold and the FCW thresholds are not satisfied, the situational awareness manager 118 determines whether any medium risk level collision threats exist. The UI system 116 is configured to highlight these medium threats to give the driver notice prior to a Yes determinations from step 508 or the step 512. For example, with TTC parameter values that exceed the AEB and FCW thresholds, the UI system 116 includes the interface elements 212 when the TTC parameter values are a few seconds in range of the thresholds used to activate other vehicle alarms and countermeasures. The UI system 116 takes care not to present the interface elements 212 to low risk collision threats. When a TTC parameter value is outside the DA threshold, the UI system 116 may refrain from outputting an indication of that potential collision threat, until the TTC parameter value approaches the emergency levels set for that vehicle.

At step 518, the driver awareness interface is modified for enhancing output of signals to the driver to indicate relative locations of medium risk collision threats. Based on updated TTC parameters obtained for each of the potential collision threats, the interface elements 212 may be modified to indicate changes to the relative location or the corresponding collision risk level determined for each of the potential collision threats. For example, the user interface 204 may change over time to use different colors or properties in conveying the interface elements 212 corresponding to each threat. This may include changing a color, sound, or haptic signal of the interface elements 212 to indicate changes to the relative location or the corresponding collision risk level determined for each of the potential collision threats. Changing the arrangement of the interface elements 212 may further indicate updates to the potential collision threats. For example, changing positioning of the interface elements 212 within the arrangement shown in the user interface 204 indicates changes to their relative locations or their relative collision risk levels among all the potential collision threats.

In general, a modification to the interface elements 212 can occur if the TTC associated with that interface element causes the risk level to change and become more or less serious. In some examples, all objects are presented in the driver interface and only medium or higher risk level threats are highlighted. In other examples, each object is highlighted differently according to a corresponding risk level. To avoid clutter, the user interface may make medium and high risk threats have more prominent signals than low risk objects shown to convey where critical situations are more likely to occur.

Other information can be used to modify the user interface and/or cause the DA threshold to change. For some examples, at step 506, the gauze direction of the driver is determined. Information about driver gauze is obtained from interior sensors or from the ADAS 108 to indicate a direction of focus for the driver. The situational awareness manager 118 can include gaze direction as a factor in updating the user interface. The situational awareness manager 118 may determine a gauze direction of the driver and cause the UI system 116 to change a signal intensity for at least one of the interface elements 212 that is output in a region of the user interface 204 that is outside the gauze direction. In other words, based on the gaze direction, the user interface 204 can cause certain interface elements 222 to have more prominence (e.g., greater brightness, louder sound, stronger haptics) to get a driver to notice the potential collision threat associated with the user interface elements 222 that are away from their gaze. The driver may be made more aware of the potential collision threats without being annoyed by an alarm or unexpected countermeasure. A corresponding UI element may be modified based on the gauze direction to increase the signaling (e.g., until the driver changes gauze), particularly when the object is outside the driver gauze.

Other example modifications to the UI elements in the user interface can include changing a color or other property of a visible UI element (e.g., from a first color to a second color to increase the signaling). A tone associated with a UI element can be varied from a first volume to a second volume to increase the signaling; similarly, strength of a haptic feedback signal associated with a corresponding UI element may be changed from a first level to a second level to increase the signaling.

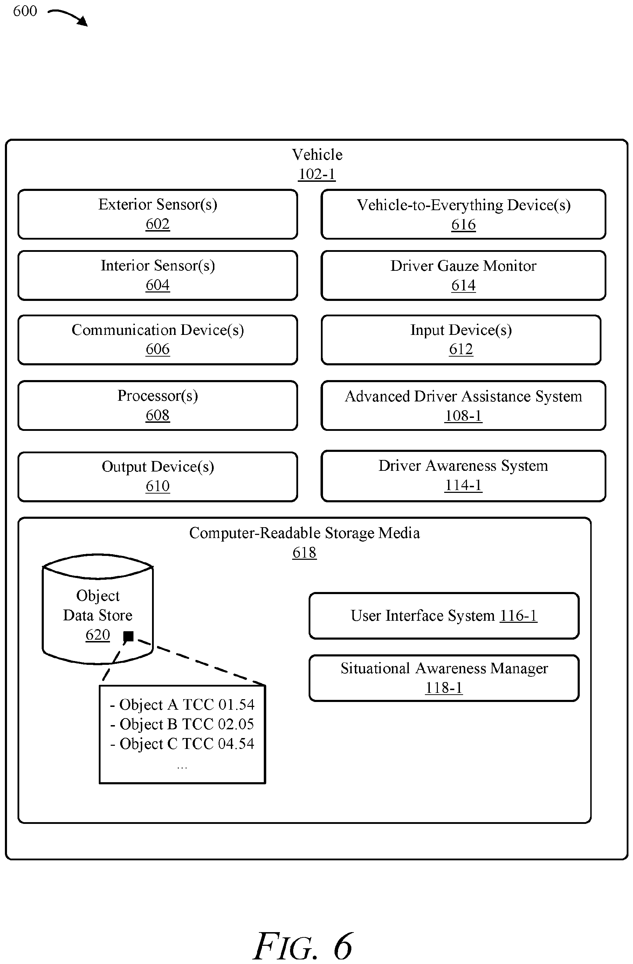

FIG. 6 illustrates an example vehicle architecture 600 with a UI for driver awareness. As an example of the vehicle 102, the vehicle architecture 600 is for a vehicle 102-1 equipped with an ADAS 108-1, which is an example of the ADAS 108. Also included in the vehicle 102-1 is a driver awareness system 114-1, which is an example of the driver awareness system 114. The ADAS 108-1 and the driver awareness system 114-1 may be part of a single or distributed system on the vehicle 102-1 and may interface with various components to execute functions.

The vehicle 102-1 includes one or more exterior sensors 602, one or more interior sensors 604, one or more communication devices 606, one or more processors 608, one or more output devices 610, one or more input devices 612, and in some cases, one or more Vehicle-to-Everything (V2X) devices 616 and/or a driver gauze monitor 614, as well as computer-readable storage media (CRM) 618. The CRM 618 stores instructions associated with a UI system 116-1 and a situational awareness manager 118-1, which, respectively, are examples of the UI system 116 and the situational awareness manager 118. Also maintained in the CRM 618 is an object data store 620 configured to maintain a list or other collection of objects tracked by the ADAS 118-1 and their respective TTC parameters. The object data store 620 may be written directly by the ADAS 108-1 and/or indirectly updated by the situational awareness manager 118-1.

The exterior sensors 602 and the interior sensors 604 may be mounted to, or integrated within, any portion of the vehicle 102 to provide an instrumented field of view. As used herein, the exterior sensors 602 can include camera systems, radar systems, lidar systems, or ultrasonic systems to detect and track the object 106. The exterior sensors 602 can provide sensor data regarding the object 106, including tracking data for the object 106. The tracking data can, for example, indicate a relative position (e.g., range and lateral positioning), heading, or speed relative the vehicle 102. In some cases, the vehicle 102 includes multiple types of exterior sensors 602, such as a radar system and a camera, which provide a larger instrument field-of-view or improved detection of objects 106. The interior sensors 604 are mounted to, or integrated within, an interior portion of the vehicle 102 to detect aspects of the driver and/or passengers. The interior sensors 604 can include a camera or radar system that captures images of the driver. In particular, the interior sensors 604 can be positioned to have a field-of-view that includes the driver's head. The interior sensors 604 can determine whether the driver is looking at the roadway 104, the object 106, or looking elsewhere.

The communication devices 606 include any radio or transceiver configured to send or receive signals for a vehicle. The communication devices 606 can include telecommunication radios, satellite transceivers, and the like. Some of the exterior sensors 602 may be configured as the communication devices 606, and the V2X devices 616 can be a subset of the communication devices 606 on the vehicle.

The processors 608 (e.g., an energy processing unit or electronic control unit) can be a microprocessor or a system-on-chip. The processors 608 can execute instructions stored in the CRM 618. For example, the processor 608 can process sensor data from the exterior sensors 602 and the interior sensors 604 and determine characteristics (e.g., relative positioning, range, and predicted tracks) for the object 106. The processor 608 can then control the operation of the UI system 116-1 to focus the driver's attention on the object 106 and avoid potential collisions or unsafe driving. For example, the processor 608 can control, based on data from the exterior sensors 602 and the interior sensors 604, the output devices 610 to display a graphical driver interface that flashes red to refocus the driver's attention on the roadway 104 and a relative position of the object 106.

The output devices 610 include any device used in providing a UI on a vehicle. The output devices 610 include output devices configured to generate audible signals (e.g., sounds, tones), visual signals (e.g., graphical elements, light indicators), and/or haptic feedback signals (e.g., vibrations) to cause the driver to take notice of a potential collision threat. Examples of the output devices 610 include audio output devices (e.g., speakers), visual output devices (e.g., display, lightbar, gauge cluster, light indicator), and haptic-feedback devices (e.g., vibration device).

The V2X devices 616 are configured to send or receive vehicle based communication messages from infrastructure devices, emergency alert systems, and other vehicles and devices to enhance and improve driving. Vehicle-to-vehicle and vehicle to infrastructure are subsets of the V2X standards and are examples of the V2X devices 616. Additional situation awareness can be obtained from V2X messages broadcast in the environment 100, which can enhance the information obtained by the ADAS for detecting objects. The processors 608 may cause the V2X devices to output V2X messages to a V2X receiver of another vehicle. These V2X messages, upon receipt by the other vehicle, cause a processor of the other vehicle to update interface elements output in a user interface for the driver of the other vehicle.

For instance, some objects may be reported in a V2V message that are not in the driver's field of view or in the instrumented field of view of the ADAS 114-1. With this additional information, the driver awareness module 114-1 can generate an indication of the other vehicle including a level of risk of collision associated with it so the driver can prepare to maneuver differently if necessary to avoid a collision.

The ADAS 108-1 and/or a separate component shown as the driver gauze monitor 614 may measure direction and/or duration of gauze of the driver based on data output from the interior sensors 604. The direction of the driver's focus can be inferred from the gauze data to enhance threat advanced notice provided by the driver awareness system 114-1. For example, if the gauze of the driver is to the left, and a bicycle is approaching the travel path of the vehicle 102-1 from the right, an indication of the bicycle's approach may be output in the UI system 116-1 with increased prominence to make the driver aware of its presence. In this way, visual alerts regarding the bicycle can be adapted to the driver's attentiveness. As described in greater detail below, if the driver is distracted and not looking at the roadway 104, the driver awareness system 114-1 can flash a red light indicator on a display to regain the driver's attention towards a potential collision threat elsewhere on the roadway 104.

In the following section, exemplified embodiments are provided.

Embodiment 1: A method for indicating changes in severity of collision risks to driving, the method comprising: obtaining information indicative of potential collision threats to objects detected near a travel path of a host vehicle, the information including a Time-To-Collision (TTC) parameter for each of the potential collision threats; determining, by at least one processor of a host vehicle, a corresponding collision risk level for each of the potential collision threats based on the TTC parameter obtained for that potential collision threat; and outputting, for assisting a driver of the host vehicle, a user interface including an arrangement of interface elements indicating a relative location along the travel path and the corresponding collision risk level determined for each of the potential collision threats.

Embodiment 2: The method of any other embodiment, wherein the corresponding collision risk level for each of the potential collision threats is determined to be one of a plurality of risk levels each indicating a different chance of resulting in a vehicle crash.

Embodiment 3: The method of any other embodiment, wherein the risk levels include: at least one first risk level for TTC parameters determined to be greater than an emergency threshold for triggering a collision warning to cause an audible alarm to be output separate from the user interface; at least one second risk level for TTC parameters determined to be between the emergency threshold and an automatic intervention threshold for triggering an automated vehicle countermeasure to avoid the vehicle crash; and at least one third risk level for TTC parameters determined to be at or less than the automatic intervention threshold.

Embodiment 4: The method of any other embodiment, further comprising: if any TTC parameters satisfies the emergency threshold, activating, separate from the user interface, a collision warning output to include an audible alarm.

Embodiment 5: The method of any other embodiment, further comprising: if any TTC parameters satisfies the automatic intervention threshold, activating, separate from the user interface, an automated vehicle countermeasure to avoid the vehicle crash.

Embodiment 6: The method of any other embodiment, wherein: the emergency threshold is approximately one and one half seconds; and the automatic intervention threshold is approximately one second.

Embodiment 7: The method of any other embodiment, further comprising: modifying, based on updated TTC parameters obtained for each of the potential collision threats, the interface elements to indicate changes to the relative location or the corresponding collision risk level determined for each of the potential collision threats.

Embodiment 8: The method of any other embodiment, wherein modifying the interface elements comprises: changing a color, sound, or haptic signal of the interface elements to indicate changes to the relative location or the corresponding collision risk level determined for each of the potential collision threats.

Embodiment 9: The method of any other embodiment, wherein modifying the interface elements comprises: changing positioning of the interface elements within the arrangement to indicate changes to the relative location or the corresponding collision risk level determined for each of the potential collision threats.

Embodiment 10: The method of any other embodiment, further comprising: determining a gauze direction of the driver; and changing a signal intensity for at least one of the interface elements that is output in a region of the user interface that is outside the gauze direction.

Embodiment 11: The method of any other embodiment, further comprising: determining, based on sensor data obtained from one or more sensors of the host vehicle, at least part of the information indicative of the potential collision threats; and determining, based on vehicle to everything (V2X) data obtained from one or more external V2X devices remote to the host vehicle, a remainder of the information indicative of the potential collision threats.

Embodiment 12: The method of any other embodiment, wherein the sensors of the host vehicle include one or more camera systems, lidar systems, radar systems, or ultrasonic systems, and the V2X data includes external observation data obtained from detection devices installed in other vehicles or V2X infrastructure.

Embodiment 13: The method of any other embodiment, further comprising: outputting, by the processor, V2X messages to a V2X receiver of another vehicle for updating one or more of the interface elements output for another driver of the other vehicle.

Embodiment 14: A vehicle system comprising one or more processors configured to perform the method of any other embodiment.

Embodiment 15: A computer-readable storage medium comprising computer-executable instructions that, when executed, cause a vehicle system to perform the method of any other embodiment.

Embodiment 16: A system comprising means for performing the method of any other embodiment.

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the scope of the disclosure as defined by the following claims.

## Claims

1. A method for indicating changes in severity of collision risks to driving, the method comprising:
obtaining information indicative of potential collision threats to objects detected near a travel path of a host vehicle, the information including a Time-To-Collision (TTC) parameter for each of the potential collision threats;
determining, by at least one processor of a host vehicle, a corresponding collision risk level for each of the potential collision threats based on the TTC parameter obtained for that potential collision threat; and
outputting, for assisting a driver of the host vehicle, a user interface including an arrangement of interface elements indicating a relative location along the travel path and the corresponding collision risk level determined for each of the potential collision threats.

2. The method of claim 1, wherein the corresponding collision risk level for each of the potential collision threats is determined to be one of a plurality of risk levels each indicating a different chance of resulting in a vehicle crash.

3. The method of claim 2, wherein the risk levels include:
at least one first risk level for TTC parameters determined to be greater than an emergency threshold for triggering a collision warning to cause an audible alarm to be output separate from the user interface;
at least one second risk level for TTC parameters determined to be between the emergency threshold and an automatic intervention threshold for triggering an automated vehicle countermeasure to avoid the vehicle crash; and
at least one third risk level for TTC parameters determined to be at or less than the automatic intervention threshold.

4. The method of claim 3, further comprising:
if any TTC parameters satisfies the emergency threshold, activating, separate from the user interface, a collision warning output to include an audible alarm.

5. The method of claim 3 or 4, further comprising:
if any TTC parameters satisfies the automatic intervention threshold, activating, separate from the user interface, an automated vehicle countermeasure to avoid the vehicle crash.

6. The method of any one of claims 3 to 5, wherein:
the emergency threshold is approximately one and one half seconds; and
the automatic intervention threshold is approximately one second.

7. The method of any one of claims 1 to 6, further comprising:
modifying, based on updated TTC parameters obtained for each of the potential collision threats, the interface elements to indicate changes to the relative location or the corresponding collision risk level determined for each of the potential collision threats.

8. The method of claim 7, wherein modifying the interface elements comprises:
changing a color, sound, or haptic signal of the interface elements to indicate changes to the relative location or the corresponding collision risk level determined for each of the potential collision threats.

9. The method of claim 7 or 8, wherein modifying the interface elements comprises:
changing positioning of the interface elements within the arrangement to indicate changes to the relative location or the corresponding collision risk level determined for each of the potential collision threats.

10. The method of any one of claims 1-8, further comprising:
determining a gauze direction of the driver; and
changing a signal intensity for at least one of the interface elements that is output in a region of the user interface that is outside the gauze direction.

11. The method of any of claims 1-10, further comprising:
determining, based on sensor data obtained from one or more sensors of the host vehicle, at least part of the information indicative of the potential collision threats; and
determining, based on vehicle to everything (V2X) data obtained from one or more external V2X devices remote to the host vehicle, a remainder of the information indicative of the potential collision threats.

12. The method of claim 11, wherein the sensors of the host vehicle include one or more camera systems, lidar systems, radar systems, or ultrasonic systems, and the V2X data includes external observation data obtained from detection devices installed in other vehicles or V2X infrastructure.

13. The method of any one of claims 1-12, further comprising:
outputting, by the processor, V2X messages to a V2X receiver of another vehicle for updating one or more of the interface elements output for another driver of the other vehicle.

14. A vehicle system comprising one or more processors configured to perform the method of any one of claims 1-13.

15. A computer-readable storage medium comprising computer-executable instructions that, when executed, cause a vehicle system to perform the method of any one of claims 1-13.
